Europäisches Patentamt

European Patent Office

Office européen des brevets

(11) Publication number: **0 011 42~**
A1

## EUROPEAN PATENT APPLICATION

(21) Application number: 79302470.4

(22) Date of filing: 06.11.79

(51) Int. Cl.³: **B 29 F 3/08**
B 29 F 3/01, B 29 H 1/~~

(30) Priority: 08.11.78 GB 4372978

(43) Date of publication of application:
28.05.80 Bulletin 80/11

(84) Designated Contracting States:
DE FR IT

(71) Applicant: USM Corporation
426 Colt Highway
Farmington Connecticut 06032(US)

(72) Inventor: Ellwood, Henry
87 Leander Drive
Castleton, Rochdale Greater Manchester(US)

(74) Representative: Gilding, Martin John et al,
P.O. Box No. 88 Belgrave Road
Leicester LE4 5BX(GB)

(54) Plastics or rubber extruders and methods of heat transfer therein.

(57) The invention relates to screw extruders, especially cold feed plastics extruders, in which an extruder screw (18) is mounted for rotation in a bore (20) of a barrel portion (10, 14, 16). The screw extruder comprises at least one roll mounted for rotation adjacent an aperture (26) in the barrel portion (10, 14, 16) so that a surface portion of the roll (24) restrains material from leaving the barrel portion (10, 14, 16) through the aperture (26) and heat transfer can be effected between the material and the roll (24). Preferably there are two such rolls (24), diametrically opposed and heated or cooled. The rolls (24) are rotated in the operation of the extruder, preferably by variable speed drive units (28), in carrying out a method of effecting heat transfer according to one aspect of the invention.

EP 0 011 428 A1

Fig_1

# Plastics or rubber extruders and methods of heat transfer therein

This invention is concerned with extruders, especially extruders for processing rubber or plastics materials, comprising a screw mounted for rotation in a bore of a barrel portion and screw driving means operative to rotate the screw to process material in the bore and to convey the material along the bore towards a discharge end of the bore. During the working of the rubber or plastics material in the bore and conveying of the material along the bore, heat is developed in the material owing to the work done on the material. To avoid overheating of the material during processing in the bore, part of the length of the barrel may be cooled to extract heat from the material in the bore.

The rate at which heat can be extracted from material in the barrel is dependent on factors which include (i) the thermal conductivity of the material, (ii) the dwell time of the material in the cooled portion of the bore, (iii) the depth of the material layer (measured radially of the screw) adjacent the cooled wall of the barrel bounding the bore, (iv) the surface area of the cooled wall in contact with the material, (v) the degree of turbulence in the material being transported along the cooled portion of the barrel, (vi) the design of the extruder screw, and (vii) the rate at which the barrel itself can be cooled.

The output of a screw-type extruder (by which is meant the rate at which processed material can be discharged by the extruder) is, from geometric considerations, dependent on the outside diameter of the screw, the flight depth, the screw pitch and the speed of rotation of the screw, and it would appear that greater and greater outputs could be achieved by employing larger and larger diameter screws. However, as screw diameter increases, the ratio of the surface area of the barrel wall (in contact with the material being processed), to the output of the extruder, decreases, and it is found to be necessary to reduce the speed of rotation of the screw, in order to increase the dwell time of the material in a cooled portion of the barrel to prevent overheating of the material; thus the expected increased output (over extruders with smaller diameter screws) is not achieved. In order to achieve an improved performance from larger extruders (i.e. extruders with screw diameters of more than about 150 mm.), especially in relation to cold-feed extruders (in which the material for processing is introduced into the extruder without being pre-heated), it is desirable to find a way of extracting heat, from material being processed, faster than can be achieved simply by cooling the barrel of the extruder in a customary manner.

Though there exists, particularly in relation to cold feed extruders, a requirement for cooling material more efficiently than is customarily possible simply by cooling the barrel, other circumstances may require heating of the material and it is one object of the present invention to provide an improved construction of screw-type extruder in which heat transfer can be achieved, with material being processed, faster than is customarily possible simply by heating or cooling the barrel of the extruders in a customary manner.

According to the invention the extruder comprises a roll rotatably mounted adjacent an aperture in a wall of the barrel portion bounding the bore so that a surface portion of the roll restrains material being processed from leaving the bore through the aperture and heat transfer can be effected between the material and said

3.

surface portion, and roll driving means operative to rotate the roll.

In one preferred so-called "cold-feed" extruder in accordance with the invention the barrel portion has a first processing section into which material for processing is introduced, e.g. by means of a roller feed arrangement at a feed station of the barrel portion, and undergoes initial processing, a second processing section (downstream of the first section) in which the material undergoes a second stage of processing involving mixing and venting of gaseous material from the material being processed, and a third processing section, which is a pumping section, by which the processed material is discharged from the extruder. The screw is mounted in a cylindrical bore in the barrel portion for rotation by the screw driving means to process material in the three sections of the barrel portion and to convey the material along the barrel portion from the roller feed arrangement to a discharge end of the barrel portion in the third section of the barrel portion.

This preferred extruder in accordance with the invention comprises two cylindrical metal rolls mounted alongside the second section of the barrel portion, between the feed station and the discharge end of the barrel portion. The rolls are rotatably mounted adjacent diametrically opposed apertures in the wall of the bore of the barrel portion so that a surface portion of each of the rolls restrains material being processed from leaving the bore through the adjacent aperture. The roll driving means preferably provides a variable speed drive for each of the rolls, operative to rotate the rolls at selected speeds about their axes. The preferred extruder further comprises heat transfer means. Conveniently, the heat transfer means comprises passageways within each roll,

4.

through which a heat transfer fluid can be passed to transfer heat to or from the surface of the roll; in the extruder described in detail hereinafter the heat transfer fluid is a coolant by which the roll surface (and thus material in contact therewith) is cooled.

Each of the two rolls of the preferred extruder is mounted so that the roll surface generator which is nearest to the axis of rotation of the screw is parallel to the axis of rotation of the screw and spaced from the axis of the bore in the barrel portion by a distance equal to the radius of the bore. (By the term "roll surface generator" is meant, where used herein, a straight line on the roll surface). Since the rolls of the preferred extruder are cylindrical, the axis of each of the rolls is parallel with the axis of rotation of the screw. In this preferred extruder, the surface portion of each roll located in its adjacent aperture in the barrel portion has a length, measured parallel to the axis of rotation of the screw, equal to four times the diameter of the screw, and each roll has a diameter of 1.875 times the diameter of the screw, but these proportions may be varied in an extruder in accordance with the invention depending on the desired performance.

Each roll of the preferred extruder has at each end an end face perpendicular to its axis, and a spiral groove is provided in an opposed flat surface of a member in the form of an end plate, spaced a short distance from the end face of the roll, so that, owing to rotation of the roll relative to the end plate, material which finds its way on to the end face of the roll is directed along the spiral groove and back through the adjacent aperture into the bore.

In the preferred extruder the screw has a right hand thread and is rotated anti-clockwise (looking forwards along the screw) for advance of material towards the discharge end of the screw. The screw has a portion of increased root diameter in the second section of the barrel portion and the material becomes spread over the surface portions of the rolls projecting into the apertures in the bore wall, with a relatively thin layer of material between the screw root and the rolls thereby facilitating heat transfer, venting of gas from the material, and processing.

Although the preferred extruder is a cold-feed extruder, an extruder in accordance with the invention may be hot fed, for example with polymeric material to be extruded, fed to the extruder directly from a polymerisation reactor.

To achieve different results, other extruders according to the invention may be preferred in some cases; for example it may be desirable to employ heating rather than cooling of the rolls and/or different combinations of screw and roll speed, hand or form of screw thread, and/or different relative directions of rotation of the screw and the rolls. In some circumstances it may be possible to achieve a required cooling of the material by natural cooling alone of the rolls. Though the rolls of the preferred extruders are cylindrical, the rolls of other extruders according to the invention could be other shapes e.g. conical (which term is used herein to include the form of a frustum of a cone) provided always that the rolls are effective to restrain material being processed from escaping from the bore through the aperture. The rolls are circular in cross section at right angles to their axes of rotation, though the diameter may differ at different positions axially of the roll. Furthermore, though in the presently preferred extruder there are used two diametrically opposed rolls, it may for other extruders according to the invention be preferred to employ only one roll or more than two rolls. The use of two diametrically opposed rolls (or more than two rolls equally spaced about the axis of the screw) provides, we believe, the advantage of a balanced load on the screw. Various combinations of features of the preferred extruders or of previously known other features (hereinbefore mentioned or not), may be used in extruders in accordance with the invention as desired.

In another of its aspects the invention provides a method of effecting heat transfer with material being processed by an extruder comprising a barrel portion, a screw mounted for rotation about an axis in a bore of the barrel portion, and screw driving means operative to rotate the screw to process the material in the bore and to convey the material along the bore towards a discharge end of the screw, the method comprising rotating a roll which is mounted adjacent an aperture in a wall of the barrel portion bounding the bore so that a surface portion of the rotating roll restrains material being processed from leaving the bore through the aperture and heat transfer is effected between the material and said surface portion.

In a preferred method in accordance with the invention the preferred extruder is used.

In operation of the preferred extruder in accordance with one preferred method in accordance with the invention the rolls are rotated in contra-rotation to the screw so that cooled surface portions of the rolls are continuously brought into contact with material which is in engagement with the rolls and efficient cooling of the material is accordingly achieved; it is believed that increased turbulence in the material, caused by the relative movement between the screw and the rolls, contributes to the efficiency of the cooling. By variation of the speed of rotation of the rolls and screw the

cooling effect and the feeding thrust on the material (i.e. the force urging the material towards the discharge end of the barrel portion) can be varied as required for effective processing of the material. The rolls may be rotated in contra-rotation to the screw up to such a speed that their peripheral speeds are slightly in excess of the peripheral speed of the screw (which would result in the material tending to be urged backwards along the bore ). Should it be required to run the rolls at still higher speeds of rotation than this, for example for more effective cooling of the material in the bore, then it might be found desirable to have a screw with a left hand threaded portion (that is oppositely threaded to the remainder of the screw) in the second section of the barrel portion so that the material is urged forwards in the second section (when the rolls are run at such higher speeds), rather than backwards (as would be the case if the thread were to be right handed in the second section), along the bore.

There now follows a detailed description, to be read with reference to the accompanying drawings, of a cold feed extruder in accordance with the invention and its use in a method in accordance with the invention. It is to be understood that this extruder and method have been selected for description to illustrate the invention by way of example.

In the accompanying drawings :-

Figure 1 is a plan view, partially cut away, of the illustrative extruder; and

Figure 2 is a sectional view on the line II-II of Figure 1.

The illustrative extruder is a cold-feed extruder (i.e. into which material to be processed is introduced without being pre-heated) and comprises a barrel portion with a first processing section 10 into which material for processing is introduced by means of a roller feed arrangement 12 and undergoes initial processing, a second processing section 14, downstream of the first section, in which the material undergoes a second stage of processing involving mixing and venting, and a third processing section 16, which is a pumping section, by which the processed material is discharged from the extruder. A screw 18 is mounted in a cylindrical bore 20 in the barrel portion for rotation about an axis coaxial with the bore. Screw driving means in the form of a motor unit 22 is operative to rotate the screw to process material in the three sections of the barrel portion and to convey the material along the bore 20 of the barrel portion from the roller feed arrangement 12 to a discharge end of the bore 20 in the third section 16 of the barrel portion.

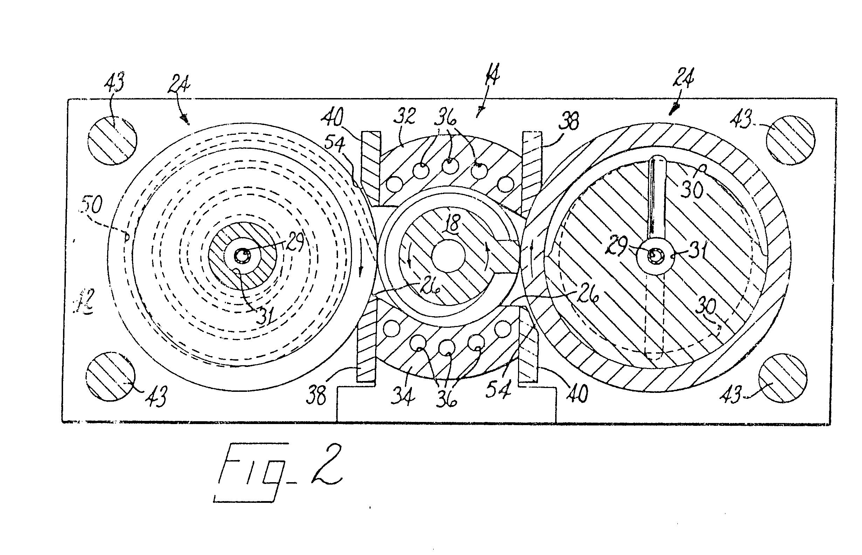

Alongside the second section 14 of the barrel portion of the illustrative extruder are mounted two smooth-surfaced, steel cylindrical rolls 24 which are rotatably mounted adjacent diametrically opposed apertures 26 (Figure 2) in a wall of the barrel portion bounding the bore, so that a surface portion of each of the rolls 24 restrains material from leaving the bore of the barrel portion through the adjacent aperture 26. Roll driving means comprises variable speed drive units 28 (one for each roll) to provide a variable speed drive for each of the rolls operative to rotate the rolls 24 at selected speeds about their axes. Roll cooling means is provided, comprising pumps (not shown), inlet conduits 29 and a helical passageway 30 within each roll 24 through which liquid coolant can be passed to cool the surface of the roll. The coolant leaves each roll through an outlet conduit 31 which surrounds the inlet conduit 29.

Each of the two rolls 24 of the illustrative extruder is mounted with its axis parallel to the axis of rotation of the screw 18. For each roll 24, the roll surface generator (being a straight line on the roll surface) which is nearest to the axis of rotation of the screw 18 is consequently parallel to the axis of rotation of the screw and is spaced from the axis of the bore 20 in the barrel portion by a distance equal to the radius of the bore. The two rolls 24 are of the same diameter and length, each having a length equal to four times the diameter of the screw, and a diameter of 1.875 times the diameter of the screw; the screw diameter is 8 inches (about 203 mm), and each roll has a diameter of 15 inches (about 381 mm) and a length of 32 inches (about 813 mm).

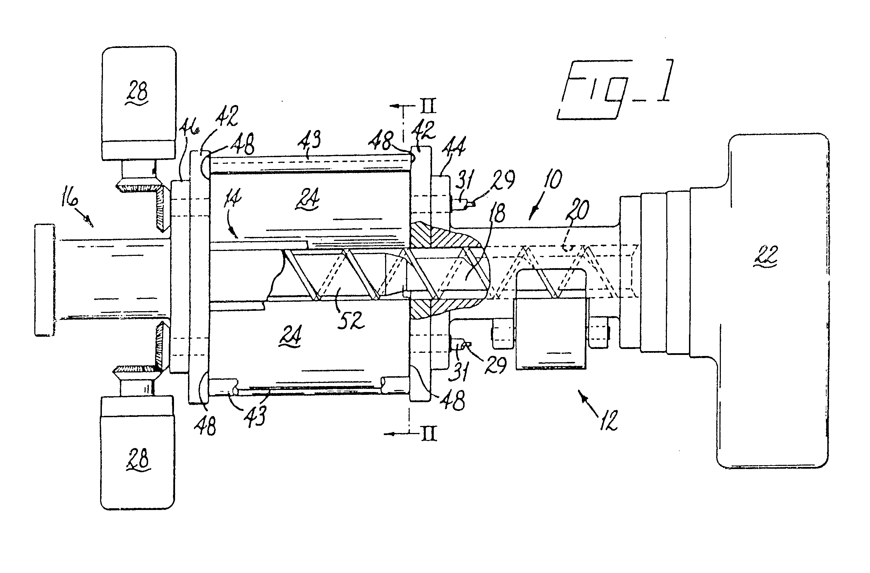

The second section 14 of the barrel portion comprises, as shown in Figure 2, a top segment 32 and a bottom segment 34, each of which can be cooled by the passage of coolant through conduits 36 therein. Arranged to accommodate rotation of the rolls 24 in the directions indicated by arrows in Figure 2, there is a scraper plate 38 and a bank bar 40 secured to each of the top and bottom segments and defining top and bottom edges to the apertures 26. Journals of the rolls 24 are mounted in bearings (not shown) carried by end plates 42; as shown in Figure 1, an end flange 44 of the first section 10 of the barrel portion is secured to one of the end plates 42, and an end flange 46 of the third section 16 of the barrel portion is secured to the other one of the end plates 42. The end plates 42 are secured by tie-bars 43. Each roll 24 has an end face 48 perpendicular to its axis, and a spiral groove 50 is provided in an opposed flat surface of the adjacent end plate, spaced a short distance from the end face of the roll, so that owing to rotation of the roll relative to the end plate material which finds its way on to the end face is directed along the spiral groove and back through the adjacent aperture 26 into the bore 20.

10.

In operation of the illustrative extruder, in carrying out the illustrative method, the rolls 24 are rotated by the drive units 28 so that cooled surface portions of the rolls are continuously brought into contact with the material which is in engagement with the rolls and efficient cooling of the material in the second section 14 of the barrel portion is accordingly achieved. Coolant is continuously circulated through the passageways 30 in the rolls to keep the surfaces of the rolls cooled and to extract heat from the material in the bore. The screw 18 has a right hand thread in the first and second sections of the barrel portion, and is rotated anti-clockwise (looking forwards along the screw) as indicated by arrows in Figure 2, for advance of material towards the discharge end of the bore 20. The rolls 24 are rotated in contra-rotation to the screw (as indicated by the arrows in Figure 2). By variation of the speed of rotation of the rolls 24 the cooling effect and the feeding thrust on the material (i.e. the force urging the material towards the discharge end of the barrel portion) in the second section 14 of the barrel portion can be varied as required for effective processing of the material; as the speed of rotation of the rolls is increased (from zero) the feeding thrust on the material (from the action of the screw in combination with the moving roll surfaces) will tend to decrease, and when the peripheral speed of the rolls is in excess of the peripheral speed of the screw there will then be a tendency for the material to be urged backwards along the bore (towards the first section 10 of the barrel portion). Accordingly, by choosing appropriate roll and screw speeds, a desired degree of cooling and efficient processing of the material can be achieved. In the illustrative extruder the screw 18 has a portion 52

11.

of increased root diameter (as shown in Figure 1) adjacent the rolls 24 in the second section 14 of the barrel portion, and the material becomes spread over the surface portions of the rolls projecting through the apertures 26, with a relatively thin layer of material between the screw root and the rolls. In performance of the invention with extruders other than the illustrative extruder it may be found desirable to employ other screw forms. It may also be found desirable to employ a left hand thread (instead of the right hand thread of the screw 18) on the screw in the second section 14 of the barrel; for example it may be found desirable should it be desired to run the rolls at such high speeds that their peripheral speeds are substantially in excess of the peripheral speed of the screw.

The second section 14 of the barrel portion also serves as a venting section, since, in view of the arrangement of the rolls 24 and the aperture 26 in the barrel portion, gases can escape from the material being processed and may be vented through suitable means e.g. a small gap 54 between the surface of the roll 24 and the bank bar 40. Means (not shown) can be provided on the illustrative extruder for controlling the atmosphere in the region of the apertures 26, for example by applying a degree of vacuum for extracting the vented gases from the material, or by applying a blanket of a gas (e.g. nitrogen) for controlling oxidation of the material.

12.

Claims :-

1. An extruder comprising a barrel portion (10, 14, 16), a screw (18) mounted for rotation about an axis in a bore (20) of the barrel portion (10, 14, 16), screw driving means (22) operative to rotate the screw (18) to process material in the bore (20) and to convey the material along the bore (20) towards a discharge end of the bore (20) characterised in that the extruder comprises a roll (24) rotatably mounted adjacent an aperture (26) in a wall of the barrel portion (10, 14, 16) bounding the bore (20) so that a surface portion of the roll (24) restrains material being processed from leaving the bore (20) through the aperture (26) and heat transfer can be effected between the material and said surface portion, and roll driving means (28) operative to rotate the roll (24).

2. An extruder according to claim 1 characterised in that the extruder comprises heat transfer means (29, 30, 31) by which heat may be transferred to or from the surface portion of the roll (24).

3. An extruder according to claim 2 characterised in that the heat transfer means (29, 30, 31) comprises passageways (30) in the roll (24) through which a heat transfer fluid can be passed.

4. An extruder according to any one of the preceding claims characterised in that the roll driving means (28) comprises a variable speed drive (28) operative to rotate the roll (24) at selected speeds.

5. An extruder according to any one of the preceding claims characterised in that the roll (24) is cylindrical or conical (as herein defined) and is generated by rotating a straight line (a so-called roll surface generator) about the roll axis, the roll surface generator which is nearest to the axis of rotation of the screw (18) being parallel to the axis of the screw (18) and spaced from the axis of the bore (20) of the barrel portion (10, 14, 16) in which the screw (18) rotates a distance equal to the radius of the bore (20).

6. An extruder according to any one of the preceding claims characterised in that the roll (24) has an end face (48) perpendicular to its axis opposed to a flat surface of a member (42) of the barrel portion (10, 14, 16), a spiral groove (50) being formed in the opposed flat surface to direct material leaking between the end face (48) and the opposed flat surface back through the adjacent aperture (26) into the bore (20) of the barrel portion (10, 14, 16).

7. An extruder according to any one of the preceding claims characterised in that the screw (18) has a portion (52) of increased root diameter opposed to the roll (24).

8. An extruder according to any one of the preceding claims characterised in that the roll (24) is arranged to be rotated in contra-rotation to the screw (18).

9. An extruder according to any one of the preceding claims characterised in that the extruder comprises a feed section (10), a mixing section (14) at which the roll (24) is mounted, and a discharge section (16), the screw (18) being of opposite hand in the mixing section (14) from the thread of the remainder of the screw (18).

10. An extruder according to any one of the preceding claims characterised in that the extruder comprises means (54) adjacent the roll (24) permitting escape of gases from the bore (20) of the barrel portion (10, 14, 16).

11. An extruder according to any one of the preceding claims characterised in that the extruder comprises a plurality of rolls (24, 24) each rotatably mounted adjacent an aperture (26, 26) in the wall bounding the bore (20) so that a surface portion of the roll (24) restrains material being processed from leaving the bore (20) through the associated aperture (26) and heat transfer can be effected between the material and the surface portion.

12. An extruder according to claim 11 characterised in that the extruder comprises two diametrically opposed rolls (24, 24).

13. A method of effecting heat transfer with material being processed by an extruder comprising a barrel portion (10, 14, 16), a screw (18) mounted for rotation about an axis in a bore (20) of the barrel portion (10, 14, 16), and screw driving means (28) operative to rotate the screw (18) to process the material in the bore (20) and to convey the material along the bore (20) towards a discharge end of the bore (20) characterised in that the method comprises rotating a roll (24) which is mounted adjacent an aperture (26) in a wall of the barrel portion (10, 14, 16) bounding the bore (20), so that a surface portion of the rotating roll (24) restrains material being processed from leaving the bore (20) through the aperture (26) and heat transfer is effected between the material and said surface portion of the roll (24).

14. A method according to claim 13 characterised in that the roll (24) is rotated in the opposite sense to the screw (18).

15. A method according to claim 14 characterised in that the peripheral speed of the roll (24) does not substantially exceed the peripheral speed of the screw (18).

16. A method according to claim 14 characterised in that the portion of the screw (18) opposed to the roll (24) has a thread of opposite hand to the remainder of the screw (18) and the roll (24) is rotated at a peripheral speed substantially greater than the peripheral speed of the screw (18).

0011428

Fig_1

Fig_2

European Patent Office

# EUROPEAN SEARCH REPORT

Application number

EP 79 30 2470

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | DE - A - 1 554 866 (REIFENHAUSER)<br>* Figures 1-5; claim 5 *<br><br>-- | 1,2,10,<br>13 | B 29 F 3/08<br>B 29 F 3/01<br>B 29 H 1/10 |
| A | US - A - 2 537 395 (BROWN)<br>* Figures 1,2 *<br><br>-- | | |
| A | GB - A - 634 048 (REDFERN'S RUBBER)<br>* Figures 1,2 *<br><br>-- | | |
| A | FR - A - 1 003 470 (P. LEISTRITZ)<br>* Figures 7,8 *<br><br>-- | | |
| A | US - A - 1 990 555 (LOOMIS)<br>* Figure 1 *<br><br>-- | | |
| A | US - A - 3 151 353 (BAYER)<br>* Figures 1-5 *<br><br>-- | | |
| A | FR - A - 2 165 352 (PONCET)<br>* Figures 9-13 *<br><br>---- | | |

TECHNICAL FIELDS SEARCHED (Int.Cl. 3)

B 29 F
B 29 H

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 08-01-1980 | KUSARDY |

EPO Form 1503.1 06.78